# EUROPEAN PATENT APPLICATION

(11) **EP 1 323 650 A1**
(43) Date of publication of application: **02.07.2003**
(21) Application number: 02027542.6
(22) Date of filing: 09.12.2002
(51) Int. Cl.: B65G 47/51

(54) **Device for soft build-up in a product-shifting system**

(30) Priority: 28.12.2001 IT VI20010269
(71) Applicant: Mariani s.a.s. di Mariani Federico & C., 36010 Carre' (Vincenza) (IT)
(72) Inventor: Dal Zotto, Giovanni, 36016 Thiene (Vicenza) (IT); Mariani, Paolo, 36016 Thiene (Vicenza) (IT)
(74) Representative: Bettello, Pietro, Dott. Ing.

(57) **Abstract**

The invention concerns a device (1) suitable for allowing soft build-up of a product-shifting system, in which there is the need to block the operation of the unit and in particular of the operating machine arranged upstream of the system itself, when the operating machine (4) arranged downstream thereof stops or else when problems arise which make difficult or stop the movement of the products. Such a device is characterised in that it has a support surface (5), next to the regular transportation line, consisting of at least one additional lane (7,8,9), which is susceptible to sliding in the same and/or opposite direction with respect to the advancing direction of the main lane (6) of the transportation line itself.

## Description

The present finding regards a device for soft build-up in a product-shifting system.

Well known amongst designers of product-shifting systems between two working areas, such as between two packaging machines in a packaging line, is the need to foresee a device which allows the operation of the unit and in particular of the shifting machine not to be blocked when the operating machine downstream thereof stops, or else when problems arise which hinder or stop the movement of the products on the shifting system itself.

Such a device, known with the term "build-up lung", takes care of holding, for a more or less long period of time, the products in movement and/or sent by the operating machine upstream, which therefore does not interrupt its work cycle, until malfunction conditions of the unit prevail and/or until the machine intended for receiving said products stops.

Constructively, a build-up lung substantially consists of a sliding surface, arranged near to the transportation line, upon which the products, which are moved when they are stopped by a mechanical stop or by other means which interrupts the regular flow, progressively build-up.

A drawback encountered during the build-up step is that of possible damaging of the surface of the built-up products caused by the overall push of the line which takes said products to knock into and press against one another or against the outer walls of the build-up lung.

As an example we quote a shifting system for plastic bottles, equipped with a build-up lung of the conventional type, where the bottles, at the main sliding line, consisting of a conveyor belt, of a roller group or other, in the case of malfunction of the unit, travel along a support surface arranged along the side of said main line and where, due to their high advancing speed, squash together with force, which causes their deformation.

The purpose of the present finding is that of foreseeing a so-called "soft" build-up device where the mutual pushing force, i.e. the squashing of the products building up is small, so as to allow the regular transportation of particularly fragile products, such as glass or easily deformable products, such as plastic containers and other packages or products which have a body which is not sufficiently strong.

The purpose is achieved with a build-up device consisting of a support surface, next to the regular transportation line, characterised in that it consists of at least one lane, which is susceptible to sliding in the same and/or opposite direction with respect to the advancing direction of the main lane of the transportation line itself.

In the constructive solution in which the build-up surface consists of at least two mobile lanes, the finding foresees that they be independent from each other, individually motorised and equipped with different advancing speeds.

Operatively, when the products, stopped by a mechanical stop, move from the main lane to build-up on the sliding side surface which constitutes the "build-up lung", the single lane or the plurality of lanes which make up said surface slide with the same advancing direction as the advancing direction of the main lane, so that the products transported firstly go against the front wall of said surface and then go side-by-side forming a layer of rows.

As the build-up action gradually proceeds, on the lung an ever more compact mass of products forms, due to the overall push of the line, which can cause the deformation by squashing of the individual built-up products.

The operating novelty of the finding foresees that, when the mass of products built-up on the build-up surface has reached a predetermined level, detected, for example, through an optical reader, at least one of the lanes which make up the support surface of the lung inverts its advancing direction, so that a portion of said products, now being moved with a direction opposing compacting, moves apart.

By suitably combining the advancing directions and speeds of the lanes which make up the support surface of the lung, a continuous remixing movement of the built-up products is realised so that they shall never be compressed together, but just next to one another and without pushing.

The finding shall be better understood through the description of a possible embodiment thereof, given as an illustrating and non-limiting example, with the help of the attached tables of drawings, where:
- fig. 1 represents a lay-out view of a product-shifting unit, equipped with the build-up device according to the finding;
- fig. 2 represents a schematic plan view of the build-up device in rest state;
- fig. 3 represents the build-up device according to fig. 2, in the starting build-up step;
- fig. 4 represents the build-up device according to fig. 2, in the inversion step of the movement of the central lane;
- fig. 5 represents the build-up device according to fig. 2, in the normal operating step.

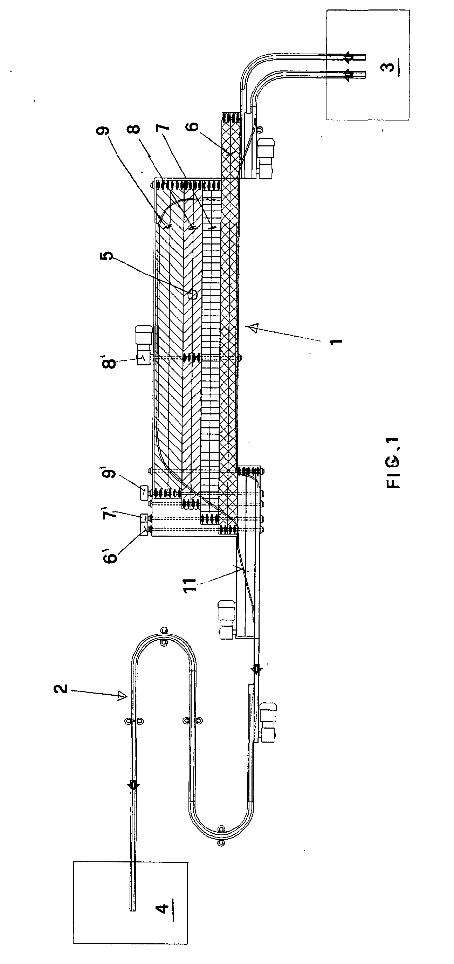

As can be seen in fig. 1, the build-up device, indicated with reference numeral 1, is applied on a transportation line 2, which transports products from the operating machine 3, arranged upstream of the line, to an operating machine 4, arranged downstream thereof.

Such a build-up device 1 consists of a support surface, wholly indicated with 5, which comprises a main lane 6 and the additional side lanes 7, 8 and 9, consisting, in a preferential embodiment thereof, of conveyor belts respectively transported by the motors 6', 7', 8' and 9'.

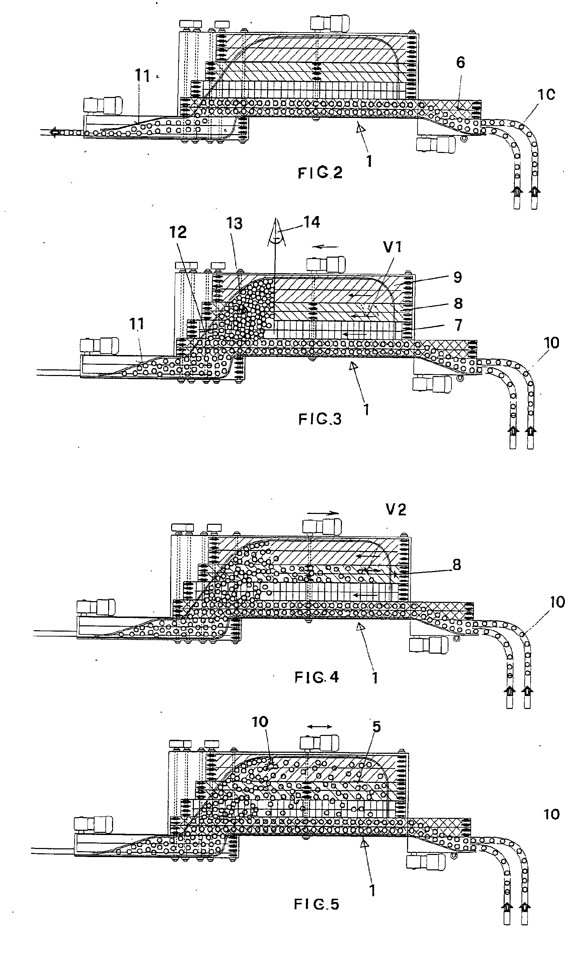

As can be seen in fig. 2, in normal operating conditions of the transportation line 1 the products 10 are regularly transported on the main lane 5, according to the direction of the arrow "V1", whereas the additional lanes are still or advance in the same direction as that of the main lane.

As can be seen in fig. 3, when there is an operating anomaly in the transportation line the mechanical stop 11 interrupts the regular flow of the products 10, which then build-up firstly against the wall 12 of the lung and then form the built-up mass of products 13.

During this starting build-up step the three additional lanes 7, 8 and 9 slide in the same direction as the advancing direction of the main lane 6, to promote the build-up and with a lower advancing speed with respect to the advancing speed of the main lane, in order to reduce the mutual pushing action between the products which gradually build-up.

When the built-up mass of products 13 has reached the predetermined level, detected with the sensor 14 (see fig. 2) and, consequently, the overall pushing force on the products is substantial, such as to be able to damage them, by squashing together, at least one of the additional lanes, preferably the central one 8, inverts the advancing direction (arrow V2), for which reason a portion of the products is progressively and continuously moved away from the build-up area and therefore the products are no longer squashed against each other (see fig. 4).

With such a constructive solution, when the build-up lung functions normally, the products built-up on the support surface 5, being supported on three side-by-side lanes capable of sliding with different advancing directions and speeds, are continuously remixed and are never squashed (see fig. 5), which constitutes the advantageous consequence which can be obtained with the device according to the finding.

Finally, when the operation of the unit becomes regular again and the mechanical stop 11 opens to allow the regular downflow of the products in movement, the central lane 8 again inverts the advancing direction, which goes back in the same direction as that of the additional side lanes and that of the main lane, to realise the unloading action of the products built-up on the support surface of the lung.

Different embodiments to the one which is described are possible according to the characteristics of the transportation line or of the products transported without for this reason departing from the scope of the claims defined hereafter.

## Claims

1. DEVICE FOR SOFT BUILD-UP IN A PRODUCT-SHIFTING SYSTEM, where there is the need to block the operation of the unit and in particular of the operating machine arranged upstream of the system itself, when the operating machine arranged downstream thereof stops or else when problems arise which make difficult or stop the movement of the products,
said device **characterised in that** it has a support surface, next to the regular transportation line, consisting of at least one additional lane, which is susceptible to sliding in the same and/or opposite direction with respect to the advancing direction of the main lane of the transportation line itself.

2. DEVICE FOR SOFT BUILD-UP IN A PRODUCT-SHIFTING SYSTEM, according to claim 1, **characterised in that** when it is made up of at least two additional lanes they are independent from each other, individually motorised, with the same and/or different advancing directions and with different speeds.

3. DEVICE FOR SOFT BUILD-UP IN A PRODUCT-SHIFTING SYSTEM, according to claims 1 and 2, **characterised in that** when the mass of products built-up on the build-up surface has reached a predetermined level, at least one of the additional lanes which make up the surface itself inverts its advancing direction, so that a portion of the products, now being transported with an opposite direction to the build-up direction, moves apart.

4. DEVICE FOR SOFT BUILD-UP IN A PRODUCT-SHIFTING SYSTEM, according to claim 3, **characterised in that** it foresees that the advancing directions and speeds of the additional lanes, which constitute the support surface, are regulated so as to realise a continuous remixing movement of the built-up products, for which reason they are never squashed together, but only next to each other without pushing.

5. DEVICE FOR SOFT BUILD-UP IN A PRODUCT-SHIFTING SYSTEM, according to one or more of the previous claims, applied on a transportation line (2), which transports products from the operating machine (3), arranged upstream of the line to an operating machine (4) arranged downstream thereof, **characterised in that** it consists of a support surface (5), which comprises a main lane (6) and the additional lanes (7, 8, 9) next to each other, consisting of conveyor belts, transported independently by the motors (6', 7', 8', 9').

6. DEVICE FOR SOFT BUILD-UP IN A PRODUCT-SHIFTING SYSTEM, according to claim 5, where, when there is an operating anomaly in the transportation line a mechanical stop (11) interrupts the regular downflow of the products (10), which then build-up firstly against the wall (12) of the lung and then form the built-up mass of products (13) **characterised in that** when the built-up mass of products (13) has reached the predetermined level, detected with the sensor (14), the additional lane (8) inverts the advancing direction, for which reason a portion of the products is progressively and continuously taken away from the build-up area, for which reason the products (10) are no longer squashed together.
